# FASCICULE DE BREVET EUROPEEN

(11) **EP 0 712 582 B1**
(45) Date de publication et mention de la délivrance du brevet: **06.02.2002**
(21) Numéro de dépôt: 94118085.3
(22) Date de dépôt: 17.11.1994
(51) Int. Cl.: A23L 1/201

(54) **Graines de légumineuses à réhydratation rapide**
Schnellkochleguminosen
Quick-cooking leguminous foods

(43) Date de publication de la demande: 22.05.1996
(73) Titulaire: SOCIETE DES PRODUITS NESTLE S.A., 1800 Vevey (CH)
(72) Inventeur: Meyer, Philippe Paul, CH-8121 Benglen (CH); Ammann, Nico, CH-1807 Blonay (CH)
(74) Mandataire: Wavre, Claude-Alain

(56) Documents cités:
- DE-B- 1 037 827
- DE-B- 1 281 254
- GB-A- 1 113 289
- US-A- 4 273 796

## Description

La présente invention a pour objet un procédé de préparation de graines de légumineuses à réhydratation rapide.

On connaît divers procédés de préparation de graines de légumineuses instantanées ou à cuisson rapide comprenant une précuisson et un séchage des graines. Un des problèmes rencontrés lors de la mise en oeuvre de ces procédés est l'éclatement et/ou la désintégration partielle des graines. Au cours de cet éclatement dû à des différences de tensions superficielles entre la pellicule et le cotylédon, la graine peut se fendre en deux moitiés qui se séparent et la font ressembler aux ailes d'un insecte. Ce phénomène est connu de l'homme du métier sous la dénomination anglaise de *butterflying.*

Pour éviter cette désintégration, il a été suggéré de réaliser un séchage contrôlé des graines cuites.

Au cas où la cuisson s'est faite sous pression, l'homme du métier peut également songer à une détente contrôlée de la vapeur suivie d'un refroidissement contrôlé des graines, autrement dit songer à réaliser les étapes de détente de la vapeur et refroidissement des graines avec ménagement et surtout lentement, par exemple.

US 4273796 décrit un procédé de préparation de graines de légumineuses à réhydratation rapide qui n'éclatent pas lors du séchage qui suit la cuisson, dans lequel on cuit les graines, à pression atmosphérique ou sous pression, dans une solution à 5-7% de sucre, et on les sèche en utilisant tout procédé de séchage connu tel que la lyophilisation ou le séchage sous vide, à l'air chaud, à l'infrarouge ou aux microondes, par exemple.

GB-A-1113289 décrit un procédé de préparation de graines relativement intactes de légumineuses à cuisson rapide ou instantanées, dans lequel les graines sont cuites sous pression dans des conditions contrôlées et l'excès de pression par rapport à la pression atmosphérique est réduit durant un temps contrôlé relativement court, de manière à créer une porosité adéquate de la surface des graines.

DE-B-1281254 décrit un un procédé de préparation de graines entières de légumineuses à cuisson rapide, dans lequel les graines lavées, passées quelques minutes à la vapeur, attendries dans l'eau chaude et cuites à la vapeur sont ensuite soumises à un processus de séchage contrôlé en plusieurs étapes successives.

La présente invention a pour but de proposer un procédé de préparation de graines de légumineuses à réhydratation rapide qui comprenne une étape de cuisson sous pression mais qui évite l'éclatement des graines sans qu'il soit nécessaire de les cuire dans une solution de sucre ni de prévoir une détente contrôlée de la pression et/ou un refroidissement contrôlé des graines.

A cet effet, dans le procédé selon la présente invention, on cuit les graines à la vapeur sous pression, on refroidit directement les graines cuites à la vapeur sous pression en les mettant sous vide sans les laisser entrer en contact avec de l'air froid avant la fin de cette étape de refroidissement et on les sèche.

On a constaté en effet avec surprise que, pour éviter l'éclatement des graines cuites à la vapeur dans une enceinte sous pression, on peut directement refroidir les graines en les mettant sous vide, à savoir en aspirant vapeur et/ou buées (*flash cooling*) sans ménagement jusqu'à une pression résiduelle dans l'enceinte notablement inférieure à la pression atmosphérique.

En d'autres termes, le présent procédé permet non seulement de ménager l'intégrité des graines qui n'éclatent pratiquement pas, mais encore de refroidir les graines notablement plus vite que si, pour comparaison, l'on détend la vapeur avec ménagement pour rétablir la pression atmosphérique dans l'enceinte et l'on refroidit ensuite lentement les graines qui présentent encore une température de environ 100°C après cette détente.

Pour mettre en oeuvre le présent procédé, on peut partir de graines de légumineuses fraîches ou sèches du commerce, notamment de graines sèches de soya, haricots, pois ou lentilles, par exemple.

On part de préférence de graines présentant une teneur en eau de 40-80%, cette teneur en eau étant soit celle des graines fraîches, soit celle des graines séchées réhydratées par trempage.

Dans ce dernier cas, à savoir pour réhydrater des graines sèches, on peut les faire tremper au préalable durant 3-30 h à 15-30°C dans une eau pure ou additionnée de 0-0,5% de HNaO₃S et/ou de 0-1% de C₆H₅Na₃O₇ comme agent stabilisant de la couleur, par exemple.

On peut cuire les graines à 105-140°C durant 3-40 min dans une enceinte où peut s'établir une pression égale à la pression de vapeur saturée à la température choisie, par exemple. L'atmosphère de vapeur peut être créée dans l'enceinte soit par vaporisation d'une quantité adéquate d'eau, soit par injection directe de vapeur, l'air initialement présent dans l'enceinte en étant chassé au début du processus, par exemple.

On peut refroidir les graines à une température de 20-80°C en les mettant sous vide par aspiration de vapeur et/ou buées jusqu'à une pression résiduelle inférieure à 300 hPa et en maintenant ce vide durant 2-10 min, par exemple.

Il est important de ne pas laisser les graines entrer en contact avec de l'air froid avant la fin de cette étape de refroidissement.

Après la cuisson et le refroidissement, les graines peuvent être séchées jusqu'à une teneur en eau résiduelle de 3-10%, par exemple. On peut réaliser ce séchage sous vide, à 40-60°C, sous une pression de 20-40 hPa et durant 5-20 h, par exemple.

Les graines de légumineuses ainsi obtenues présentent un aspect très semblable à celui de graines correspondantes sèches mais non cuites. La proportion de graines éclatées est en particulier remarquablement faible.

Ces graines peuvent se réhydrater généralement en 5-10 min dans l'eau bouillante, voire en 3-4 min dans une eau à 70-80°C pour des graines de petites dimensions telles que des lentilles, par exemple. On peut les utiliser telles quelles ou comme ingrédient dans un mélange déshydraté pour potage à cuisson rapide, par exemple.

Les exemples ci-après illustrent diverses formes de réalisation du procédé de préparation de graines de légumineuses à réhydratation rapide selon la présente invention. Les pourcentages y sont exprimés en poids.

### Exemple 1

On trempe des haricots blancs (*navy beans*) secs du commerce durant 6 h dans une eau à température ambiante contenant 0,25% de HNaO₃S et 0,5% de C₆H₅Na₃O₇, après quoi ils présentent une teneur en eau de 54,0%. On rince les graines trempées durant 5 min à l'eau courante.

On place les graines dans un autoclave. On injecte de la vapeur directement dans l'autoclave tout en chassant d'abord l'air qu'il contient. On porte la température des graines à 120°C en 2 min. On maintient la température à 120°C durant 12 min. On met alors les graines sous vide en aspirant la vapeur jusqu'à une pression résiduelle de 250 hPa. On maintient ce vide durant 3 min après quoi l'on ouvre l'autoclave.

Les graines cuites présentent une teneur en eau de 50,6%. On ne compte que quelques pourcents de graines éclatées.

On sèche les graines à 50°C sous 30 hPa durant 14 h.

Les graines ainsi obtenues présentent une teneur en eau résiduelle de 6,2%. Elles présentent l'aspect des haricots blancs secs de départ et se réhydratent en 6 min dans l'eau bouillante.

### Exemples 2-4

On prépare des graines déshydratées de flageolets, de haricots rouges (*red kidney beans*) et de haricots bruns (*Borlotti beans*) de manière semblable à celle décrite à l'exemple 1 pour les haricots blancs (*navy beans*).

Les valeurs des différents paramètres opératoires au cours des différentes étapes ainsi que les teneurs en eau des graines sont regroupées dans le tableau 1 ci-après où l'on a également reporté les valeurs correspondantes présentées à l'exemple 1.

**Tableau 1**

| Etapes et conditions respectives | Ex. 1 haricots blancs | Ex. 2 flageolets | Ex. 3 haricots rouges | Ex. 4 haricots bruns |
|---|---|---|---|---|
| | | | | |

| **Trempage à température ambiante** | | | | |
|---|---|---|---|---|
| durée (h) | 6 | 16 | 16 | 16 |
| additif | 0,25% HNaO₃S | 0,25% HNaO₃S | - | - |
| additif | 0,5% C₆H₅Na₃O₇ | - | - | - |
| teneur en eau (%) | 54,0 | 58,2 | 55,9 | 54,7 |

| **Rinçage à l'eau courante** | | | | |
|---|---|---|---|---|
| durée (min) | 5 | 5 | 5 | 5 |

| **Cuisson à la vapeur** | | | | |
|---|---|---|---|---|
| température (°C) | 120 | 125 | 125 | 130 |
| durée (min) | 12 | 30 | 30 | 35 |

| **Refroidissement** | | | | |
|---|---|---|---|---|
| pression (hPa) | 250 | 250 | 250 | 250 |
| durée (min) | 3 | 3 | 3 | 3 |
| température °C) | 70 | 70 | 70 | 70 |
| teneur en eau (%) | 49,4 | 50,8 | 50,0 | 51,4 |

| **Séchage** | | | | |
|---|---|---|---|---|
| température (°C) | 50 | 50 | 50 | 50 |
| pression (hPa) | 30 | 30 | 30 | 30 |
| durée (h) | 14 | 15 | 15 | 15 |
| teneur en eau (%) | 6,2 | 5,5 | 7,0 | 5,3 |

Les graines ainsi obtenues présentent l'aspect des graines respectives de départ. Très peu ont éclaté. Leur couleur est restée belle. Elles se réhydratent en 5-10 min dans l'eau bouillante.

## Revendications

1. Procédé de préparation de graines de légumineuses à réhydratation rapide, dans lequel on cuit les graines à la vapeur sous pression, on refroidit directement les graines cuites à la vapeur sous pression en les mettant sous vide sans les laisser entrer en contact avec de l'air froid avant la fin de cette étape de refroidissement et on les sèche.

2. Procédé selon la revendication 1, dans lequel on part de graines présentant une teneur en eau de 40-80%, on les cuit à une température de 105-140°C durant 3-40 min, on les refroidit à une température de 20-80°C en les mettant sous vide par aspiration de vapeur et/ou buées jusqu'à une pression résiduelle inférieure à 300 hPa et en maintenant ce vide durant 2-10 min.

3. Procédé selon la revendication 1, dans lequel on sèche les graines jusqu'à une teneur en eau résiduelle de 3-10%.

4. Procédé selon la revendication 3, dans lequel on sèche les graines sous vide à 40-60°C sous une pression de 20-40 hPa durant 5-20 h.

## Patentansprüche

1. Verfahren zur Herstellung von schnell rehydratisierbaren Hülsenfrüchtesamen, bei dem man die Samen mit Dampf unter Druck kocht, die mit Dampf unter Druck gekochten Samen direkt kühlt, indem man sie unter Unterdruck setzt, ohne sie vor Beendigung dieses Kühlschritts mit kalter Luft in Kontakt treten zu lassen, und sie trocknet.

2. Verfahren nach Anspruch 1, bei dem man von Samen mit einem Wassergehalt von 40-80% ausgeht, sie 3-40 min bei einer Temperatur von 105-140°C kocht, sie auf eine Temperatur von 20-80C° kühlt, indem man sie durch Absaugung von Dampf und/oder Kondenswasser bis zu einem Restdruck von unter 300 hPa unter Unterdruck setzt und diesen Unterdruck 2-10 min lang aufrechterhält.

3. Verfahren nach Anspruch 1, bei dem man die Samen bis zu einem Restwassergehalt von 3-10% trocknet.

4. Verfahren nach Anspruch 3, bei dem man die Samen bei 40-60°C unter einem Unterdruck von 20-40 hPa während 5-20 h trocknet.

## Claims

1. Method for preparing quick-rehydrating leguminous seeds, wherein the seeds are cooked with pressurized steam, the seeds cooked with pressurized steam are immediately cooled by putting them under vacuum without letting them come into contact with cold air before the end of this cooling step, and they are dried.

2. Method according to claim 1, wherein seeds are started with having a water content of 40-80%, they are cooked at a temperature of 105-140°C for 3-40 min, they are cooled to a temperature of 20-80°C by putting them under vacuum by drawing off steam and/or vapour to a residual pressure below 300 hPa while holding this vacuum for 2-10 min.

3. Method according to claim 1, wherein the seeds are dried to a residual water content of 3-10%.

4. Method according to claim 1, wherein the seeds are dried under vacuum at 40-60°C under a pressure of 20-40 hPa for 5-20 h.
